# EUROPEAN PATENT SPECIFICATION

(11) **EP 1 358 797 B1**
(45) Date of publication and mention of the grant of the patent: **29.12.2004**
(21) Application number: 03008829.8
(22) Date of filing: 24.04.2003
(51) Int. Cl.: A01M 1/04, A01M 1/14, A01M 1/02

(54) **Insect-killing device**
Insektentötendes Gerät
Dispositif pour tuer les insectes

(30) Priority: 03.05.2002 IT PD20020111
(43) Date of publication of application: 05.11.2003
(73) Proprietor: MULTITECNO S.r.l., 30025 Fossalta Di Portogruaro (Prov. of Venezia) (IT)
(72) Inventor: Reatti, Guido, 35128 Padova (IT)
(74) Representative: Modiano, Guido, Dr.-Ing.

(56) References cited:
- EP-A- 0 976 323
- EP-A- 1 161 865
- US-A- 5 651 211

## Description

The present invention relates to an insect-killing device.

As is known, especially in food industries and in industries that manufacture items intended for food use, there is the need to protect work environments effectively against flies and flying insects in general.

Devices are currently known in the background art, see e.g. document US-A-5,651,211, which are constituted by a box-like enclosure that has, in an upper region, ultraviolet lamps, which are designed to attract the insects and below which cartridges are arranged; a ribbon treated with an adhesive impregnated with substances that attract insects, for example food-derived substances and/or pheromone-based substances, is unwound from said cartridges and constitutes a trap.

The cartridges, due to reasons related to the recycling of the material and to manufacturing simplicity, are constituted by cardboard folded so as to form a box, which is shaped like an elongated parallelepiped in which a feeder roller and a takeup roller for the ribbon are rotatably coupled at its ends.

The takeup roller has a toothed wheel keyed thereto; when the cartridge is inserted in its corresponding seat of the enclosure, such toothed wheel meshes with a pinion that is connected kinematically to a gearmotor.

This type of device is not free from drawbacks. The convenience of using cardboard to manufacture the cartridges does not combine well with the need to comply with shape tolerances that allow the toothed wheel keyed onto the takeup roller to mesh with the pinion once the cartridge has been inserted in its seat.

The seat, moreover, must be provided with a stroke limiter so that the cartridge can be inserted without error in the correct position.

Moreover, in most cases devices of this type are placed in environments where humidity is relatively high and can deform the cardboard cartridge, compromising the meshing of the toothed wheel with the pinion even when it occurs correctly initially.

Further, the need to provide a mechanical connection between the gearmotor and the takeup roller does not allow to maintain an adequate degree of protection for the electrical components of the device, such as for example the gearmotor and the electric circuit for supplying power to the lamps, which are laterally adjacent thereto.

The aim of the present invention is to provide an insect-killing device that solves or substantially reduces the problems of known kinds of insect-killing device.

Within this aim, an object of the present invention is to provide an insect-killing device that always ensures correct actuation of the takeup roller of the cartridge.

Another object is to provide an insect-killing device in which the cartridge can be positioned simply and rapidly without the danger of compromising the actuation of the takeup roller.

Another object is to provide an insect-killing device that ensures an adequate degree of protection for the electrical components.

Another object is to provide an insect-killing device that can be used effectively even in environments that are particularly humid and/or at risk of explosion, such as sugar mills, cereal mills, dairies, sausage factories, slaughterhouses, et cetera.

Another object is to provide an insect-killing device that has a simple structure and a low cost.

This aim and these and other objects that will become better apparent hereinafter are achieved by an insect-killing device according to claim 1, of the type that comprises a box-like body provided in an upper region with lamps capable of emitting luminous radiation that attracts insects and forms in a lower region a seat for a cartridge made of cardboard, which comprises a feeder roller and a takeup roller between which a ribbon treated with adhesive impregnated with insect-attracting substances is unwound, providing a trap for the insects attracted by said lamps, said device being characterized in that said takeup roller is kinematically connected to a motorized actuator by means of a coupling based on magnetic attraction.

Preferred features of the invention are set out in the dependent claims.

Further characteristics and advantages of the invention will become better apparent from the description of a preferred but not exclusive embodiment thereof, illustrated only by way of non-limitative example in the accompanying drawings, wherein:

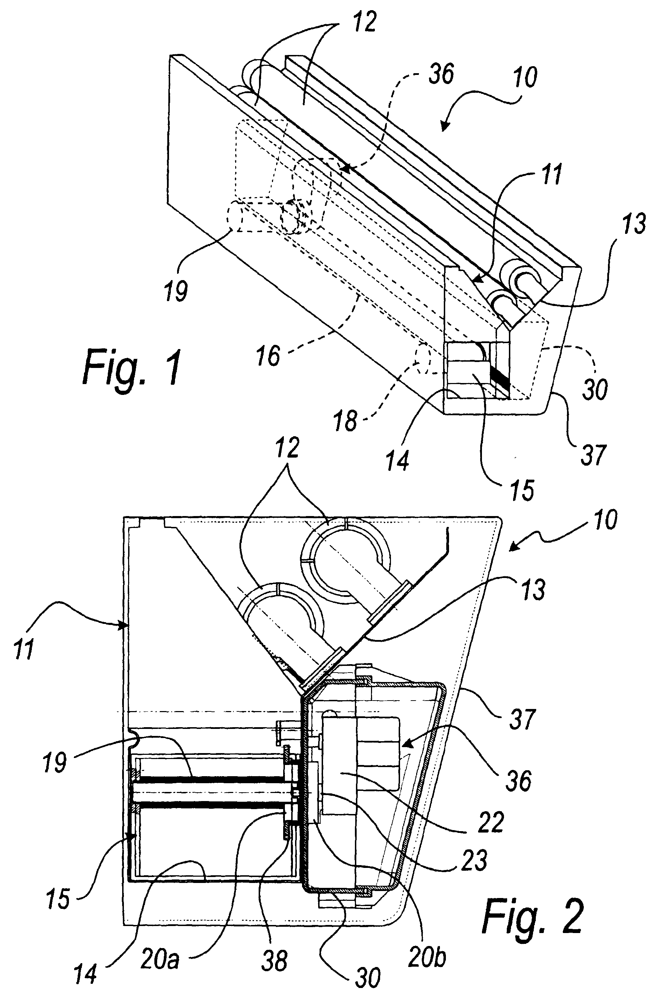

Figure 1 is a perspective view of an insect-killing device having the structure according to the invention in a first embodiment;
Figure 2 is a transverse sectional view of the device of Figure 1;
Figures 3 and 4 are respectively a transverse sectional view and a perspective view of a portion of the device according to the invention;
Figure 5 is a perspective view of a component of the insect-killing device;
Figures 6 and 7 are respectively a transverse sectional view and a side view of an insect-killing device having the structure according to the invention in a second embodiment;
Figure 8 is an enlarged-scale view of a detail of Figure 7;
Figure 9 is a perspective view of a detail of the insect-killing device that is common to both embodiments.

With reference to the figures, an insect-killing device having the structure according to the invention is generally designated by the reference numeral 10 in a first embodiment.

The device 10 comprises, inside a protective enclosure 37, a box-like supporting body 11 that supports in an upper region, on an inclined wall 13, two lamps 12 capable of emitting luminous radiation that attracts insects, and forms in a lower region a longitudinally elongated seat 14 in which a cartridge 15 of ribbon 16 treated with adhesive impregnated with insect-attracting substances is inserted with minimal play.

The cartridge 15 comprises an elongated parallelepipedal body 17, which is made of cardboard and on which a feeder roller 18 and a takeup roller 19 for the ribbon 16 are rotatably coupled.

A portion of ribbon 16 is unwound between the feeder roller 18 and the takeup roller 19 and is arranged above the parallelepipedal body 17, in the region below the lamps 12, forming a trap for the insects attracted by the lamps 12.

The takeup roller 19 is kinematically connected, by means of a coupling based on magnetic attraction that is described in greater detail hereinafter, to a motorized actuator 36, which is also described in greater detail hereinafter.

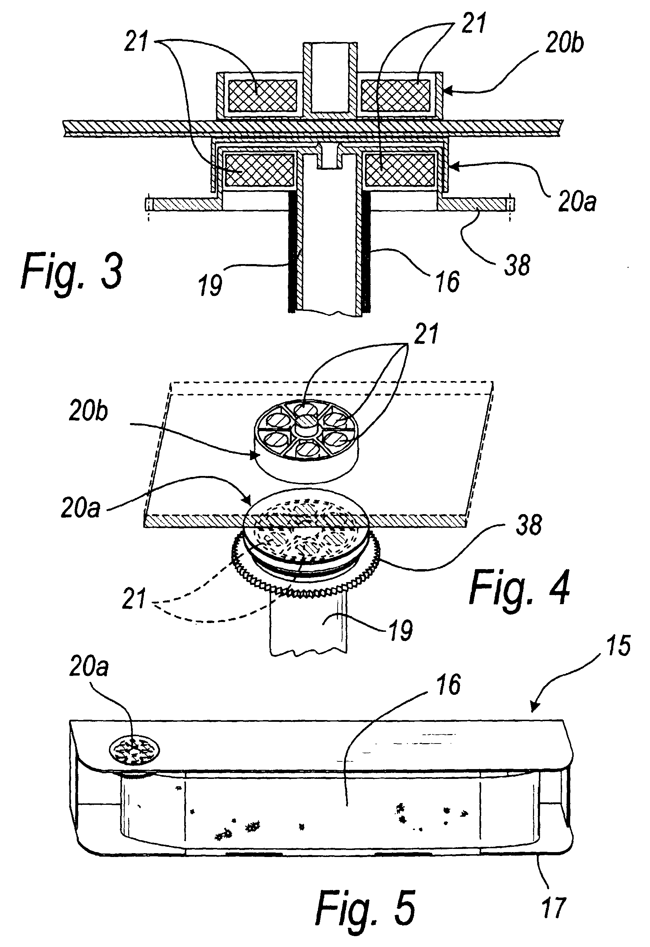

As clearly shown in Figures 3 and 4, the magnetic coupling is constituted by a pair of facing coaxial elements 20a and 20b, which are magnetically attracted; the first element 20a is fixed and coaxial to the takeup roller 19 and the second element 20b is kinematically connected to the motorized actuator 36.

The coaxial elements 20a and 20b are disk-shaped, and each element is provided with a plurality of permanent magnets 21 which are arranged in succession and are aligned circumferentially.

The motorized actuator 36 is constituted by an electric gearmotor 22, in which the last element of the kinematic chain is a secondary shaft 23 on which the second coaxial element 20b is keyed.

Advantageously, a toothed wheel 38 protrudes coaxially from the first coaxial element 20a and, in addition to allowing the manual advancement of the ribbon 16, allows to use the cartridge 15 also in insect-killing devices of the conventional type, by meshing the toothed wheel 38 with a pinion of a gearmotor.

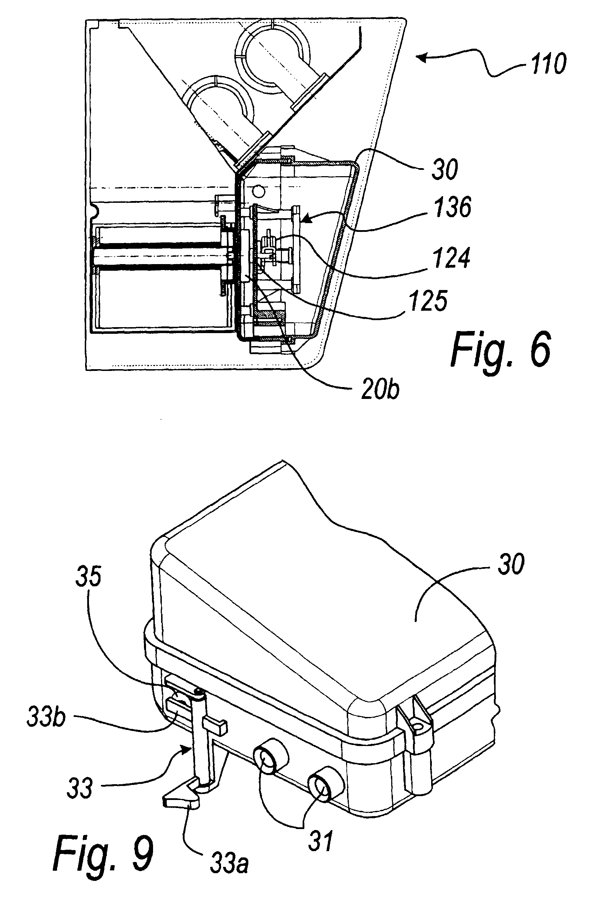

Figures 6 to 8 illustrate a second embodiment of the device according to the invention, which is now designated by the reference numeral 110 and is fully similar to the preceding embodiment except for the motorized actuator 136, which in this case comprises an arm 124 that is keyed with one of its ends to a secondary shaft 125, which is arranged coaxially to the second disk-like element 20b and is connected thereto by means of a coupling with antireversing mechanism, which is not shown for the sake of simplicity but is in any case of the known type, for example of the freewheel type, such as to allow rotation in only one direction of the coaxial element 20b as a consequence of the rotation of the secondary shaft 125.

An electrically actuated piston 127 pushes against the arm 124 and a return spring 128 also acts on the arm.

The arm 124 further supports a permanent magnet 129 on the end that lies opposite the one where it is keyed to the shaft 125.

In practice, in this second embodiment the motorized actuator 136 imparts a stepwise advancement to the takeup roller 19.

Every time the piston 127 makes the arm 124 oscillate forward, said arm turns the second coaxial element 20b and accordingly turns the takeup roller 19.

Since the second coaxial element 20b can move only in one direction of rotation, it remains locked when the arm 124 moves backward, drawn back by the spring 128 after the impulse of the electrically actuated piston 127.

Advantageously, the components of the electrical circuit for supplying power to the lamps 12 and the motorized actuator 36,136, the second coaxial element 20b, and the motorized actuator 36,136 itself are arranged within a box-like container 30, which is closed hermetically and is designed to be fixed laterally to the box-like body 11.

In particular, the second coaxial element 20b is arranged so as to face and be adjacent to a portion of the wall of the box-like container 30, and once fixed to the box-like body 11 it is located at the first coaxial element 20a, which is keyed on the takeup roller 19.

The box-like body 11 and the box-like container 30 are of course made of nonmagnetic material, so that there is no interference of any kind on the magnetic attraction of the coaxial elements 20a and 20b.

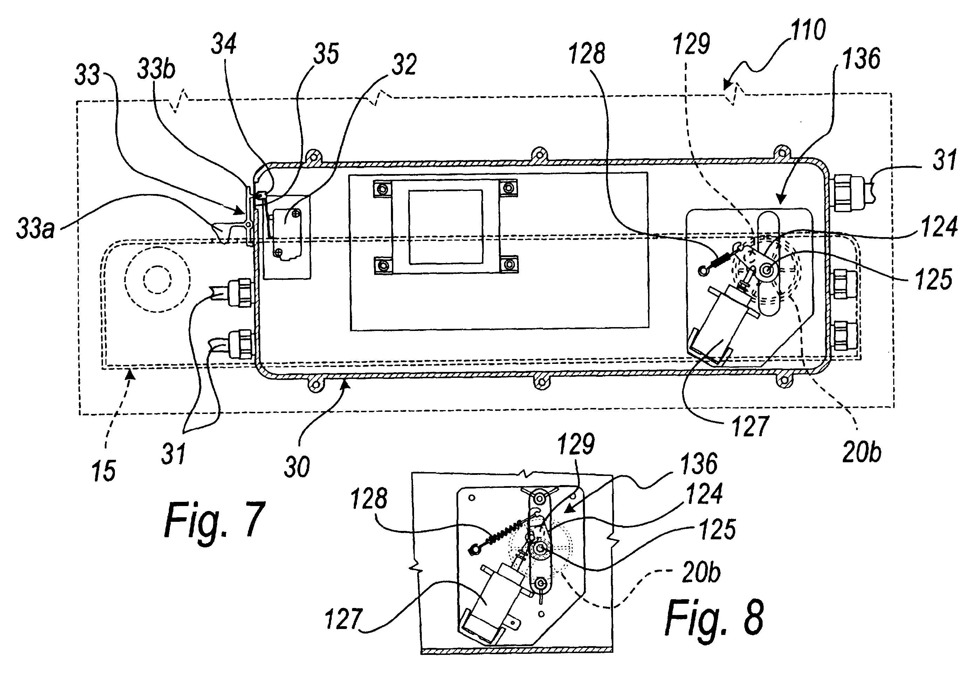

As shown in Figure 7, cables 31 exit from the box-like container 30 in order to supply power to the lamps 12 and connect the circuit to the power supply system.

The insect-killing device 10,110 further comprises a switch 32, which is inserted in said power supply circuit and is associated with corresponding actuation means, described in greater detail hereinafter, which are kept in the active condition by the ribbon 16.

The actuation means are constituted by an arm 33, which is articulated laterally to the box-like container 30, with an end 33a that normally rests on the ribbon 16 and an opposite end 33b that acts on an element 34 for deactivating the switch 32 by interposing an insulation diaphragm 35 suitable to ensure the hermetic sealing of the box-like container 30.

The arm 33 can move between an activation position, at which it rests with the end 33a on the ribbon 16, and a deactivation position, at which itengages in a corresponding opening formed in the end portion of the ribbon 16.

In practice it has been found that the present invention has achieved the intended aim and objects.

It is in fact evident that the coupling between the motorized actuator 32,132 and the takeup roller 19 is always ensured by way of the magnetic attraction of the coaxial elements 20a and 20b, and therefore there no longer is the danger of incorrect unwinding of the ribbon 16.

Moreover, stroke limiters are no longer necessary in the seat 14, since the cartridge 15 can be inserted from either end of said seat and automatically finds its correct position by way of the attraction of the coaxial elements 20a and 20b.

It is further possible to ensure a certain degree of insulation of the electric power supply circuit of the device 10,110, since a physical connection between the takeup roller 19 and the means for moving it is no longer necessary.

Moreover, even if the cartridge 15 were deformed due to excessive humidity of the surrounding environment, the movement of the takeup roller 10 would still be ensured correctly.

The insect-killing device can be used effectively also in environments that are particularly humid and/or at risk of explosion, such as sugar mills, cereal mills, dairies, sausage factories, slaughterhouses, et cetera.

The present invention is susceptible of numerous modifications and variations, all of which are within the scope of the appended claims.

The technical details may be replaced with other technically equivalent elements.

The materials, so long as they are compatible with the contingent use, as well as the dimensions, may be any according to requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An insect-killing device, of the type that comprises a box-like body (11) provided in an upper region with lamps (12) capable of emitting luminous radiation that attracts insects and forms in a lower region a seat (14) for a cartridge (15) made of cardboard, which comprises a feeder roller (18) and a takeup roller (19) between which a ribbon (16) treated with adhesive impregnated with insect-attracting substances is unwound, providing a trap for the insects attracted by said lamps (12), said device being **characterized in that** said takeup roller (19) is kinematically connected to a motorized actuator (36,136) by means of a coupling based on magnetic attraction.

2. The insect-killing device according to claim 1, **characterized in that** said magnetic coupling is constituted by two facing coaxial elements (20a, 20b) which are attracted magnetically, a first element (20a) of said coaxial elements being fixed coaxially with respect to said takeup roller (19), a second element (20b) of said coaxial elements being kinematically connected to said motorized actuator (36,136).

3. The insect-killing device according to claim 2, **characterized in that** said coaxial elements (20a, 20b) are disk-like, and each one is provided with a plurality of permanent magnets (21) which are arranged in succession and in circumferential alignment.

4. The insect-killing device according to claim 1, **characterized in that** said motorized actuator (36) is constituted by an electric gearmotor (22), in which the last element of the kinematic chain is a secondary shaft (23) that is keyed on said second coaxial element (20b).

5. The insect-killing device according to one or more of claims 1 to 3, **characterized in that** said motorized actuator (136) is of the type with stepwise advancement.

6. The insect-killing device according to claim 5, **characterized in that** said motorized actuator (136) comprises an arm (124) in which one end is keyed on a secondary shaft (125) that is arranged coaxially to said second disk-like element (20b) and is connected thereto by way of a coupling with antireversing mechanism, a piston (127) acting by pushing on said arm (124), a return spring (128) also acting on said arm (124), which supports, at the end that lies opposite the keying end, a permanent magnet (129) that faces said magnets (21) of the second disk-like element (20b).

7. The insect-killing device according to one or more of the preceding claims, **characterized in that** its electric power supply circuit, said motorized actuator (36,136) and said second disk-like element (20b) are arranged within a box-like container (30), which is closed hermetically and is to be fixed laterally to said box-like body (11).

8. The insect-killing device according to one or more of the preceding claims, **characterized in that** said box-like body (11) and said box-like container (30) are made of nonmagnetic material.

9. The insect-killing device according to one or more of the preceding claims, **characterized in that** said electric circuit comprises a switch (32), which is associated with corresponding actuation means and is kept in the active condition by said ribbon (16).

10. The insect-killing device according to claim 9, **characterized in that** said actuation means are constituted by an arm (33), which is articulated at its central portion laterally to said box-like container (30), so that one end (30a) thereof normally rests on said ribbon (16) and the opposite end (30b) thereof acts on an element (34) for deactivating said switch (32) by interposing an insulation diaphragm (35) that is suitable to maintain the hermetic seal of said box-like container (30).

11. The insect-killing device according to claim 10, **characterized in that** said arm (33) can move between an activation position, at which it rests with one end (33a) thereof on said ribbon (16), and a deactivation position, at which said end (33a) engages in an opening formed in the end portion of said ribbon (16).

12. The insect-killing device according to one or more of the preceding claims, **characterized in that** a toothed wheel (38) protrudes coaxially from said first coaxial element (20a).

## Patentansprüche

1. Insektentötungsvorrichtung des Typs, der einen kastenähnlichen Körper (11) umfasst, der in einem oberen Bereich mit Lampen (12) versehen ist, die Lichtstrahlung aussenden können, die Insekten anzieht, und der in einem unteren Bereich einen Sitz (14) für eine aus Pappe hergestellte Kassette (15) bildet, die eine Vorschubwalze (18) und eine Aufnahmewalze (19) enthält, zwischen denen ein mit Klebstoff beschichtetes Band (16), das mit insektenanziehenden Substanzen imprägniert ist, abgewickelt wird, wodurch für die Insekten, die durch die Lampen (12) angezogen werden, eine Falle geschaffen wird, wobei die Vorrichtung **dadurch gekennzeichnet ist, dass** die Aufnahmewalze (19) über eine auf magnetischer Anziehung basierende Kopplung mit einem motorgetriebenen Aktuator (36, 136) kinematisch verbunden ist.

2. Insektentötungsvorrichtung nach Anspruch 1, **dadurch gekennzeichnet, dass** die magnetische Kopplung durch zwei einander zugewandte koaxiale Elemente (20a, 20b) gebildet ist, die magnetisch angezogen werden, wobei ein erstes (20a) der koaxialen Elemente in Bezug auf die Aufnahmewalze (19) koaxial befestigt ist und ein zweites (20b) der koaxialen Elemente mit dem motorgetriebenen Aktuator (36, 136) kinematisch verbunden ist.

3. Insektentötungsvorrichtung nach Anspruch 2, **dadurch gekennzeichnet, dass** die koaxialen Elemente (20a, 20b) scheibenförmig sind und jedes von ihnen mit mehreren Permanentmagneten (21) versehen ist, die aufeinander folgend und in Umfangsrichtung ausgerichtet angeordnet sind.

4. Insektentötungsvorrichtung nach Anspruch 1, **dadurch gekennzeichnet, dass** der motorgetriebene Aktuator (36) aus einem elektrischen Getriebemotor (22) gebildet ist, in dem das letzte Element der kinematischen Kette eine Sekundärwelle (23) ist, die an dem zweiten koaxialen Element (20b) verkeilt ist.

5. Insektentötungsvorrichtung nach einem oder mehreren der Ansprüche 1 bis 3, **dadurch gekennzeichnet, dass** der motorgetriebene Aktuator (136) vom Typ mit schrittweiser Vorwärtsbewegung ist.

6. Insektentötungsvorrichtung nach Anspruch 5, **dadurch gekennzeichnet, dass** der motorgetriebene Aktuator (136) umfasst: einen Arm (124), wovon ein Ende an einer Sekundärwelle (125) verkeilt ist, die koaxial zu dem zweiten scheibenförmigen Element (20b) angeordnet und damit über eine Kopplung mit Umkehrverhinderungsmechanismus verbunden ist, einen Kolben (127), der auf den Arm (124) schiebend einwirkt, und eine Rückstellfeder (128), die ebenfalls auf den Arm (124) einwirkt und an dem Ende, das dem Verkeilungsende gegenüberliegt, einen Permanentmagneten (129) unterstützt, der dem Magneten (21) des zweiten scheibenförmigen Elements (20b) zugewandt ist.

7. Insektentötungsvorrichtung nach einem oder mehreren der vorhergehenden Ansprüche, **dadurch gekennzeichnet, dass** ihre Schaltung für die Lieferung elektrischer Leistung, der motorgetriebene Aktuator (36, 136) und das zweite scheibenförmige Element (20b) in einem kastenähnlichen Behälter (30) angeordnet sind, der hermetisch verschlossen ist und an dem kastenähnlichen Körper (11) seitlich zu befestigen ist.

8. Insektentötungsvorrichtung nach einem oder mehreren der vorhergehenden Ansprüche, **dadurch gekennzeichnet, dass** der kastenähnliche Körper (11) und der kastenähnliche Behälter (30) aus einem nicht magnetischen Werkstoff hergestellt sind.

9. Insektentötungsvorrichtung nach einem oder mehreren der vorhergehenden Ansprüche, **dadurch gekennzeichnet, dass** die elektrische Schaltung einen Schalter (32) umfasst, der entsprechenden Betätigungsmitteln zugeordnet ist und durch das Band (16) im aktiven Zustand gehalten wird.

10. Insektentötungsvorrichtung nach Anspruch 9, **dadurch gekennzeichnet, dass** die Betätigungsmittel durch einen Arm (33) gebildet sind, der an seinem Mittelabschnitt seitlich an dem kastenähnlichen Behälter (30) angelenkt ist, so dass eines seiner Enden (30a) normalerweise auf dem Band (16) liegt und sein gegenüberliegendes Ende (30b) auf ein Element (34) einwirkt, um den Schalter (32) durch Einfügen einer isolierenden Membran (35), die die hermetische Dichtung des kastenähnlichen Behälters (30) aufrechterhalten kann, zu deaktivieren.

11. Insektentötungsvorrichtung nach Anspruch 10, **dadurch gekennzeichnet, dass** sich der Arm (33) zwischen einer Aktivierungsposition, in der er mit einem seiner Enden (33a) auf dem Band (16) liegt, und einer Deaktivierungsposition, in der dieses Ende (33a) in einer im Endabschnitt des Bandes (16) ausgebildeten Öffnung in Eingriff ist, bewegen kann.

12. Insektentötungsvorrichtung nach einem oder mehreren der vorhergehenden Ansprüche, **dadurch gekennzeichnet, dass** ein Zahnrad (38) koaxial von dem ersten koaxialen Element (20a) vorsteht.

## Revendications

1. Dispositif pour tuer les insectes, du type qui comprend un corps similaire à une boîte (11), disposé dans une région supérieure avec des lampes (12), aptes à émettre des rayonnements lumineux qui attirent les insectes et forme, dans une région inférieure, un logement (14) pour une cartouche (15), faite en carton, qui comprend un cylindre d'alimentation (18) et un cylindre d'appel (19), entre lesquels un ruban (16), traité avec un adhésif imprégné de substances qui attirent les insectes, est déroulé, prévoyant un piège pour les insectes, attirés par lesdites lampes (12), ledit dispositif étant **caractérisé en ce que** ledit cylindre d'appel (19) est relié de manière cinématique à un actionneur à moteur (36, 136) au moyen d'un accouplement, fondé sur une attraction magnétique.

2. Dispositif pour tuer les insectes selon la revendication 1, **caractérisé en ce que** ledit accouplement magnétique est constitué par deux éléments coaxiaux se faisant face (20a, 20b), qui sont attirés magnétiquement, un premier élément (20a) desdits éléments coaxiaux étant fixé coaxialement par rapport audit cylindre d'appel (19), un deuxième élément (20b) desdits éléments coaxiaux étant relié de manière cinématique audit actionneur à moteur (36, 136).

3. Dispositif pour tuer les insectes selon la revendication 2, **caractérisé en ce que** lesdits éléments coaxiaux (20a, 20b) sont similaires à des disques et que chacun est pourvu d'une pluralité d'aimants permanents (21), qui sont agencés en succession et en alignement circonférentiel.

4. Dispositif pour tuer les insectes selon la revendication 1, **caractérisé en ce que** ledit actionneur à moteur (36) est constitué par un moto-réducteur électrique (22), dans lequel le dernier élément de la chaîne cinématique est un arbre secondaire (23), qui est calé sur ledit deuxième élément coaxial (20b).

5. Dispositif pour tuer les insectes selon une ou plus des revendications 1 à 3, **caractérisé en ce que** ledit actionneur à moteur (136) est du type, qui comporte une avance par étapes.

6. Dispositif pour tuer les insectes selon la revendication 5, **caractérisé en ce que** ledit actionneur à moteur (136) comprend un bras (124), dans lequel une extrémité est calée sur un arbre secondaire (125), qui est agencé coaxialement sur ledit deuxième élément similaire à un disque (20b) et y est relié au moyen d'un accouplement avec un mécanisme anti-inversion, un piston (127), agissant par poussée sur ledit bras (124), un ressort de rappel (128) agissant aussi sur ledit bras (124), qui supporte, à l'extrémité qui se situe à l'opposé de l'extrémité de calage, un aimant permanent (129), qui fait face aux dits aimants (21) du deuxième élément, similaire à un disque (20b).

7. Dispositif pour tuer les insectes selon l'une ou plus des revendications précédentes, **caractérisé en ce que** son circuit d'alimentation en courant électrique, ledit actionneur à moteur (36, 136) et ledit deuxième élément similaire à un disque (20b) sont agencés à l'intérieur d'un contenant similaire à une boîte (30), qui est fermée hermétiquement et doit être fixée latéralement audit corps similaire à une boîte (11).

8. Dispositif pour tuer les insectes selon l'une ou plus des revendications précédentes, **caractérisé en ce que** ledit corps similaire à une boîte (11) et ledit contenant similaire à une boîte (30) sont faits en un matériau non magnétique.

9. Dispositif pour tuer les insectes selon l'une ou plus des revendications précédentes, **caractérisé en ce que** ledit circuit électrique comprend un commutateur (32), qui est associé à des moyens d'actionnement correspondants et est conservé dans l'état actif par ledit ruban (16).

10. Dispositif pour tuer les insectes selon la revendication 9, **caractérisé en ce que** lesdits moyens d'actionnement sont constitués par un bras (33), qui est articulé dans sa partie centrale, latéralement, par rapport au dit contenant similaire à une boîte (30), de sorte qu'une extrémité (30a) de celui-ci demeure, normalement, sur ledit ruban (16) et que l'extrémité opposée (30b) de celui-ci agit sur un élément (34), pour désactiver ledit commutateur (32) en interposant une membrane d'isolation (35), qui convient pour maintenir la fermeture hermétique dudit contenant similaire à une boîte (30).

11. Dispositif pour tuer les insectes selon la revendication 10, **caractérisé en ce que** ledit bras (33) peut se déplacer entre une position d'activation, sur laquelle il demeure avec une extrémité (33a) de celui-ci sur ledit ruban (16) et une position de désactivation, sur laquelle ladite extrémité (33a) vient en prise dans une ouverture, formée dans la partie d'extrémité dudit ruban (16).

12. Dispositif pour tuer les insectes selon l'une ou plus des revendications précédentes, **caractérisé en ce que** une roue dentée (38) fait saillie coaxialement, depuis ledit premier élément coaxial (20a).
